(19) **Europäisches Patentamt**

**European Patent Office**

**Office européen des brevets**

(11) Numéro de publication: **0 312 670 B1**

(12) **FASCICULE DE BREVET EUROPEEN**

(45) Date de publication de fascicule du brevet:
**12.02.92**

(21) Numéro de dépôt: **87440070.8**

(22) Date de dépôt: **22.10.87**

(51) Int. Cl.⁵: **A01J 25/08**, A01J 25/12

(54) **Procédé de fabrication de fromages à la louche et récipient de coagulation autorisant la mise en oeuvre du dit procédé.**

(43) Date de publication de la demande:
**26.04.89 Bulletin 89/17**

(45) Mention de la délivrance du brevet:
**12.02.92 Bulletin 92/07**

(84) Etats contractants désignés:
**AT BE CH DE ES GB GR IT LI LU NL SE**

(56) Documents cités:
**EP-A- 0 165 091**
**EP-A- 0 235 867**
**CH-A- 405 808**

(73) Titulaire: **ADEPA AGENCE NATIONALE POUR LE DEVELOPPEMENT DE LA PRODUCTIOUE APPLIOUEE A L'INDUSTRIE**
**13-17 Rue Périer**
**F-92120 Montrouge (Hauts-de-Seine)(FR)**

(72) Inventeur: **Delavaud, Christian**
**13/17 rue Périer**
**F-92120 Montrouge Hauts-de-Seine(FR)**

(74) Mandataire: **Lepage, Jean-Pierre**
**Cabinet Lepage & Aubertin Innovations et Prestations S.A. 23/25, rue Nicolas Leblanc**
**B.P. 1069**
**F-59011 Lille Cédex 1 (Nord)(FR)**

# Description

L'invention est relative à un procédé de fabrication de fromages à la louche ainsi qu'à un récipient de coagulation autorisant la mise en oeuvre du dit procédé. L'invention trouvera tout particulièrement son application dans l'industrie alimentaire.

Le procédé a été développé plus particulièrement pour la fabrication de fromages à pâte molle tels que camembert, brie ou autres et les fromages à pâte fraiche tels que faisselle, fromage blanc battu ou autres, néanmoins, il pourra être appliqué à d'autres produits sans pour autant sortir du cadre de la présente invention.

Il existe actuellement deux procédés de fabrication de fromages qui se distinguent essentiellement par le rythme de production et la qualité du produit obtenu. En particulier, on connait un procédé industriel à très haute productivité qui ne permet malheureusement pas d'obtenir un produit final riche sur le plan gustatif.

La fabrication traditionnelle de fromages dite "fabrication à la louche" permet d'élaborer un produit de grande valeur, grâce à un respect des équilibres en constituants, toutefois les cadences de fabrication sont très faibles et ne permettent pas de concurrencer économiquement le procédé industriel.

Dans la fabrication du fromage, on commence par provoquer la maturation du lait, dont on a préalablement ajusté la teneur en matière grasse.

Cette maturation est obtenue par addition de ferments dans une cuve de stockage

A l'issue de cette opération, on réalise l'empressurage du lait qui est dirigé dans un récipient dans lequel il coagule pour présenter une consistance gélifiée.

L'évolution de la transformation du lait est suivie avec minutie afin de déterminer le moment précis où le fromage a atteint son degré d'achèvement. A ce moment précis, il convient d'arrêter l'évolution de la transformation du lait pour tenter de conserver le fromage dans son plus haut degré de réalisation.

C'est à ce stade que le procédé industriel se distingue du procédé traditionnel. Pour stabiliser le fromage, dans le procédé industriel, on travaille le coagulum, c'est-à-dire le lait traité afin de stabiliser son développement. C'est ainsi que l'on brise la masse de coagulum pour la diviser en morceaux. La réaction de transformation dans la masse est ainsi brisée et des ensembles des morceaux sont regroupés dans un moule pour former un fromage. L'intérêt du procédé est qu'il peut facilement être automatisé et être mis en oeuvre à l'aide d'installations à forte productivité.

Par contre, les inconvénients de cette solution sont nombreux. En particulier, il est très difficile de déterminer avec précision lorsque l'on traite des masses importantes de coagulum, l'instant précis où il faut mettre un terme à l'évolution biologique. Par ailleurs, la forme géométrique des particules de coagulum brisé n'est pas contrôlée or la qualité d'un fromage dépend du respect des teneurs de certains de ses constituants. Le tranchage du coagulum a pour conséquence de provoquer une phase d'exsudation pour les particules, c'est-à-dire qu'elles éliminent une partie de l'eau qu'elles renferment. Il est important à ce niveau de limiter les déperditions car non seulement l'eau s'évacue mais également les protéines indispensables à l'obtention du goût particulier du fromage.

Les morceaux tranchés ne présentent aucune forme géométrique bien définie et par conséquent le rapport de leur surface extérieure par rapport à leur volume variable ne permet pas de contrôler les déperditions en protéines préjudiciables à la qualité et à la saveur du produit final.

C'est précisément dans le but de conserver les protéines du coagulum, que dans le procédé traditionnel, on utilise une louche pour trancher le coagulum et diriger la matière enlevée dans un moule d'élaboration du fromage.

La louche hémisphérique permet de déterminer un certain rapport géométrique entre le volume de matière enlevée et la surface découpée dans le coagulum. Ce rapport géométrique permet de limiter les déperditions en protéines du coagulum, d'où l'obtention d'un produit de haute qualité gustative.

En France, en respectant les impératifs de la fabrication traditionnelle, le fromage bénéficie d'un label d'appellation d'origine contrôlée.

Initialement, seul un opérateur spécialisé était à même d'effecteur les prélèvements de matière dans le coagulum à l'aide d'une louche. Actuellement, des tentatives sont faites pour substituer l'opérateur humain par un dispositif mécanique.

Parmi ces dispositifs, on connaît le robot par exemple du type à cinq axes susceptible de reproduire les gestes humains. Les avantages sont une régularité du moulage par contre il s'agit d'une machine onéreuse, délicate d'entretien et qui présente un rendement médiocre.

Plus élaboré est le procédé qui met en oeuvre une installation connue sous l'appellation "d'ISIGNY", tel que décrit dans le document EP-A-0.165.091, qui comporte les caractéristiques du préambule de la revendication 1.

Dans ce procédé, le moulage est réalisé par pénétration de louches ouvertes dans le coagulum ou caillé, contenu dans une bassine.

Plus précisément, on tranche le caillé contenu dans la bassine et on recueille la matière prélevée, à l'aide d'une louche, puis l'ensemble du dispositif louche est alors translaté au-dessus d'un bloc de moules dans lequel le caillé est déposé.

Le prélèvement dans la bassine est réalisé suivant un cadre de coordonnées dans le but d'améliorer le rendement en louches à l'intérieur de la bassine.

Par contre, les empreintes laissées par les premiers prélèvements de louches dans le caillé, créent ce que l'on appelle des "clochers", qui gênent la régularité en poids des prélèvements. Le système est encombrant et peu flexible, par ailleurs, il y a des pertes de matières en fond de bassine qui ne peuvent être récupérées pour la fabrication de camemberts.

Par ailleurs, on connaît du document EP-A-0.235.867 un procédé de fabrication de fromages dans lequel le caillé est disposé dans un récipient cylindrique dont le fond est escamotable. Ce document comporte les caractéristiques du préambule de la revendication 5.

Pour effectuer les différentes parts de fromages, ce document décrit un dispositif de coupe et de transport de la matière prélevée vers un moule.

Plus précisément, entre le récipient de caillé et le moule est disposé un système comprenant un piston mobile verticalement et en translation, ainsi qu'un manchon intermédiaire de maintien de la matière prélevée, mobile en translation, placés en aval d'un couteau mobile en translation prévu à la partie inférieure du récipient.

Un tel système permet un tranchage rectiligne, par le bas du caillé, mais n'est cependant pas du tout adapté à la fabrication de fromages à la louche.

En définitive, les solutions proposées pour tenter d'améliorer la fabrication de type traditionnelle ne sont guère satisfaisantes et entraînent économiquement des surcoûts importants qui gênent le développement du produit.

Le but principal de la présente invention est de présenter un procédé de fabrication de fromages à la louche qui est conforme aux règles françaises de l'appellation d'origine tout en bénéficiant des avantages d'une fabrication automatisée à haute productivité.

En ce qui concerne la saveur et les propriétés gustatives du produit final, le procédé de la présente invention suspecte entièrement le tranchage du coagulum à la louche avec une déperdition minime en protéines. Il faut également souligner à ce sujet un avantage de la présente invention par rapport aux installations automatisées dans ce sens que les vibrations transmises au coagulum sont des plus limitées étant donné qu'il est fait appel à des pièces mécaniques de petites dimensions disposant d'une faible inertie et que peu de mouvements de translation sont effectués.

Un autre but de la présente invention est de présenter un procédé de fabrication dans lequel les pertes de matières sont nulles. Contrairement au procédé à la louche classique, dans lequel le fond de coagulum dans la bassine ne peut être récupéré, selon la présente invention, l'intégralité du coagulum peut être transformée en fromages d'où un meilleur rendement de la matière consommée.

Un autre but de la présente invention est de présenter un récipient de coagulation pour la mise en oeuvre du dit procédé dont la fabrication peut facilement être réalisée industriellement et qui permet un bon contrôle de l'élaboration du produit. En particulier, selon un mode préférentiel de réalisation du récipient, celui-ci dispose d'un faible volume d'où une grande homogénéité de la matière contenue et une facilité dans la détermination du mouvement d'élaboration optimum du caillé.

D'autres buts et avantages de la présente invention apparaîtront au cours de la description qui va suivre qui n'est cependant donnée qu'à titre indicatif et qui n'a pas pour but de la limiter.

Selon l'invention, le procédé de fabrication de "fromages à la louche", qui trouvera notamment son application dans l'industrie alimentaire, au cours duquel le lait, placé dans un récipient, subit une maturation par ajout de ferments, puis un empressurage et ensuite, à l'issue d'une phase de coagulation, il se transforme en caillé ou coagulum, procédé dans lequel on tranche le caillé contenu dans le récipient et on recueille la matière prélevée, à l'aide d'une louche, puis on dirige la matière prélevée dans un moule, est caractérisé par le fait que :

- on tranche le caillé par le bas du récipient selon un premier mouvement circulaire d'une première louche hémisphérique, dite de prélèvement,
- on réceptionne la matière prélevée dans une seconde louche hémisphérique, dite de réception, concentrique à la dite première louche,
- on dépose la matière prélevée au-dessus du moule, par un second mouvement circulaire de la dite deuxième louche, concentrique à la dite première louche.

En outre, selon l'invention, le récipient de coagulation pour l'élaboration de "fromages à la louche", destiné à recevoir le lait afin qu'il subisse une maturation par ajout de ferments, puis un empressurage, et ensuite, à l'issue d'une phase de coagulation, qu'il se transforme en caillé ou coagulum, le dit récipient étant de forme cylindrique et présentant un fond escamotable, est caractérisé par le fait que le fond est formé par une louche de prélèvement hémisphérique.

L'invention sera mieux comprise à la lecture de la description suivante accompagnée de dessins en annexe parmi lesquels:

- la figure 1 schématise les différentes phases du procédé de fabrication d'un fromage à la

EP 0 312 670 B1

louche,

- la figure 2 illustre une vue de coupe le tranchage du caillé selon le procédé de fabrication de la présente invention,

- les figures 3a, b, et c représentent les différentes phases du prélèvement de caillé selon le procédé de fabrication de la présente invention.

- la figure 4 schématise, en vue extérieure, le récipient de coagulation selon un mode préférentiel de réalisation de celui-ci,

- la figure 5 schématise une batterie de moulage pour la fabrication de fromage selon la présente invention.

La présente invention vise un procédé de fabrication de fromage à la louche ainsi qu'un récipient de coagulation pour l'élaboration de fromage selon une mise en oeuvre du dit procédé. Elle trouvera notamment son application dans l'industrie alimentaire.

Bien qu'ayant été développée plus spécialement pour la fabrication de fromages à pâte molle tels que camembert et brie ou fromages à pâte fraiche tels que faisselle ou fromage blanc battu, la présente invention pourra être appliquée à d'autres types de produits similaires.

On peut distinguer, dans la fabrication des fromages, la méthode industrielle de la méthode traditionnelle selon le mode de traitement du caillé ou coagulum.

Industriellement, la transformation biologique du coagulum est stabilisée par tranchage de celui-ci en fines particules. Cette réduction de la matière ne lui permet plus de bénéficier de l'effet de masse indispensable à l'évolution de sa transformation et la matière est moulée pour former les fromages.

Malheureusement, le coagulum brutalisé perd une partie importante de ses protéines ce qui entraine un affaiblissement notable de ses propriétés gustatives. En cas de déperditions trop importantes, le fromage présente un aspect de "plâtre".

Selon le procédé de fabrication traditionnelle dite "à la louche" qui bénéficie en France d'une appellation d'origine, le coagulum est débité par tranchage dans sa masse, à la louche de paquets qui sont ensuite dirigés dans un moule.

Les avantages de l'utilisation d'une louche sont un respect du coagulum et la détermination géométrique d'un rapport entre le volume prélevé et la surface découpée qui permet à l'issue de la phase d'exsudation d'obtenir une rétention au sein du coagulum, des protéines indispensables à la saveur du fromage.

Différents procédés mécaniques ont été mis au point pour réaliser le prélèvement à la louche du coagulum. Toutefois jusqu'à présent ces procédés n'ont guère été totalement satisfaisants sur le plan qualitatif et économique.

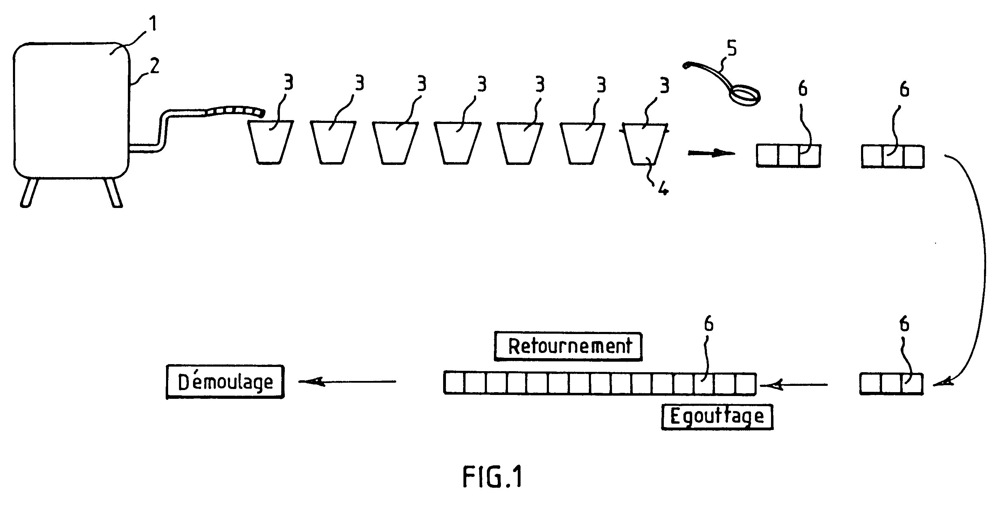

La figure 1 illustre les différentes phases nécessaires à l'élaboration d'un fromage, selon les critères indispensables pour la "fabrication à la louche".

Tout d'abord, le lait subit une maturation en une ou plusieurs étapes, généralement il s'agit d'une maturation primaire et d'une maturation secondaire. La maturation est obtenue par ajout de ferments dans une cuve de stockage.

Préalablement à la maturation, la teneur en matière grasse du lait est ajustée.

Le lait subit ensuite une opération d'empressurage. Il s'agit de traitements classiques, à la portée de l'Homme de l'Art.

Le lait 1 stocké dans une cuve 2 est ensuite réparti dans des récipients 3 généralement appelés bassines.

Dans ces bassines, le lait subit une phase de coagulation et donne du coagulum ou caillé 4.

L'évolution de la coagulation doit être surveillée avec soin pour déterminer le moment opportun de prélèvements du caillé à la louche 5. Les prélèvements se font à la surface du coagulum dont la masse flasque est tranchée par la louche 5 et la matière prélevée est dirigée dans des moules 6. Généralement, le remplissage des moules 6 se fait en plusieurs louchés. Une fois les moules remplis, ils sont stockés afin de permettre un égouttage de la matière et des retournements sont opérés avant de procéder au démoulage.

La particularité du procédé de fabrication de la présente invention concerne plus particulièrement l'opération de prélèvement du coagulum 4 à la louche 5 dans le récipient 3. La préparation du coagulum ou caillé 4 est réalisé dans le récipient 3 ce qui a pour avantage de procéder de façon statique afin d'éviter toute manipulation ou transfert qui risquerait de nuire à la consistance en masse.

Selon la caractéristique principale du procédé de l'invention, on tranche le caillé ou coagulum par le bas à l'aide d'une louche dans laquelle on recueille la matière prélevée qui est ensuite dirigée vers un moule. Contrairement aux méthodes de fabrication actuelles dans lesquelles le prélèvement du coagulum a toujours lieu au niveau de sa surface supérieure, selon le procédé de la présente invention c'est précisément dans sa partie basse que les prélèvements sont effectués. Les avantages de ce changement sont notamment de bénéficier des forces de pesanteur pour faciliter le remplissage de la louche, d'où une possibilité de vider l'intégralité du récipient 3 de coagulation ce qui annule les pertes de matière.

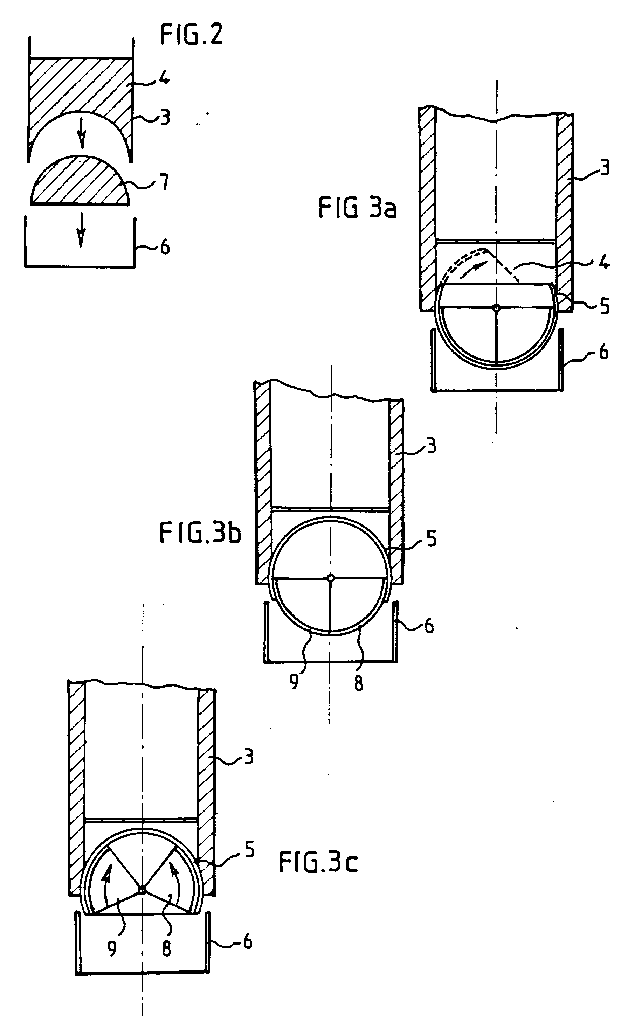

De préférence, tel qu'illustré à la figure 2, on tranche le caillé 4 avec le louche sur toute la section du récipient 3. Ainsi, les phénomènes de "clochers", créés par les empreintes des prélèvements successifs et rencontrés auparavant sont totalement évités.

Le caillé 4 est tranché par le bas selon un mouvement circulaire d'une louche hémisphérique dont le diamètre correspond sensiblement à celui du récipient 3. La matière 7 prélevée est réceptionnée dans le moule 6.

Selon ce procédé, le coagulum 4 ne souffre d'aucune contrainte, ne subit aucune vibration étant donné que le récipient 3 est entièrement statique. Il s'agit d'un récipient de petite dimension étant donné que pour respecter l'appellation d'origine, la louche présente un diamètre d'environ 110 mm. De par sa faible capacité, il est indispensable de pouvoir vider entièrement le récipient de coagulation 3 du caillé 4 contenu, ce qui est réalisé avec le prélèvement par le bas.

Par le mouvement circulaire de la louche hémisphérique, la matière tranchée 7 présente un rapport géométrique entre masse et surface précis.

Les figures 3a, b, et c représentent respectivement les différentes phases du procédé de prélèvement à la louche du caillé contenu dans un récipient 3 de coagulation.

Tout d'abord, le caillé 4 est tranché par la louche 5 disposée à la partie inférieure du récipient 3 grâce à un mouvement circulaire de la dite louche 5 de forme hémisphérique.

A l'issue du mouvement de rotation tel qu'illustré à la figure 3b, la louche 5 obture le fond du récipient de coagulation 3 et évite ainsi que le caillé ne puisse par gravité descendre.

La matière prélevée est réceptionnée dans une seconde louche hémisphérique inférieure, formée de deux demi-louches 8 et 9.

Le moulage de la matière prélevée est obtenu grâce à un mouvement tournant des deux demi-louches 8 et 9 qui viennent glisser contre la louche supérieure 5 comme le montre la figure 3c et qui créent ainsi un dégagement nécessaire pour que la matière puisse pénétrer dans le moule 6.

A l'issue du moulage, les demi-louches 8 et 9 reviennent en position inférieure d'obturation et la louche 5 est à nouveau actionnée dans un mouvement tournant pour reprendre la position occupée à la figure 3a. Le fond du récipient 3 est alors dégagé et la colonne de caillé peut alors descendre et être tranchée par la louche 5 à nouveau. Le cycle se perpétue jusqu'à épuisement du caillé 4 dans le récipient 3.

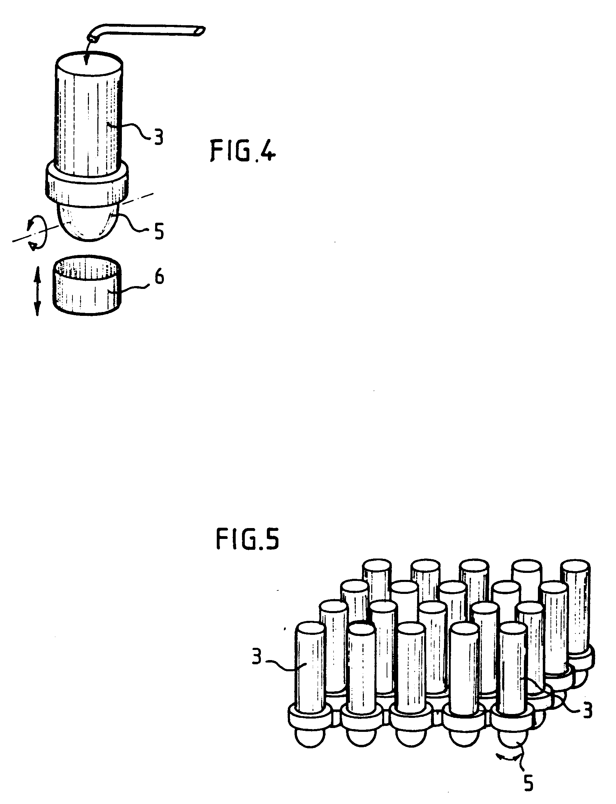

La figure 4 schématise la vue d'un récipient de coagulation 3 fixe muni d'une louche hémisphérique rotative 5 disposée à sa partie inférieure et qui constitue non seulement l'organe de prélèvement mais également le fond escamotable du récipient 3. Le moule 6 est disposé à la partie inférieure de la louche 5 et permet de réceptionner la quantité de matière prélevée.

De par la faible quantité de matière placée dans le récipient 3, en phase industrielle, on disposera de batteries de moulage tel que cela est illustré à la figure 5 dans laquelle de nombreux récipients 3 sont disposés côte à côte et présentent des louches 5 à commandes groupées.

Comme cela est illustré à la figure 3a, la dimension de la louche 5 de prélèvement est légèrement supérieure au diamètre intérieur du récipient de coagulation 3. Cette disposition a été adoptée pour d'une part assurer une bonne étanchéité au niveau du fond du récipient 3 et d'autre part pour faciliter le tranchage du coagulum 4.

La caractéristique du récipient de coagulation 3 est de disposer d'un fond escamotable afin de permettre la descente du coagulum dans la louche lorsque le fond du récipient est escamoté. Il est judicieux d'utiliser précisément la louche 5 comme fond du récipient 3 pour trancher le caillé et contrôler sa descente en colonne dans le récipient 3.

D'autres mises en oeuvre de la présente invention, à la portée de l'Homme de l'Art, auraient également pu être envisagées sans pour autant sortir du cadre de celle-ci, tel que défini dans les revendications.

## Revendications

1. Procédé de fabrication de "fromages à la louche", qui trouvera notamment son application dans l'industrie alimentaire, au cours duquel le lait, placé dans un récipient (3), subit une maturation par ajout de ferments, puis un empressurage et ensuite, à l'issue d'une phase de coagulation, il se transforme en caillé (4) ou coagulum,
   procédé dans lequel on tranche le caillé (4) contenu dans le récipient (3) et on recueille la matière prélevée (7), à l'aide d'une louche, puis on dirige la matière prélevée (7) dans un moule (6),
   caractérisé par le fait que :
   - on tranche le caillé (4) par le bas du récipient (3) selon un premier mouvement circulaire d'une première louche hémisphérique (5), dite de prélèvement,
   - on réceptionne la matière prélevée (7) dans une seconde louche hémisphérique (8, 9), dite de réception, concentrique à la dite première louche (5),
   - on dépose la matière prélevée (7) au-dessus du moule, par un second mouvement circulaire de la dite deuxième louche (8, 9), concentrique à la dite première louche (5).

2. Procédé de fabrication de fromages à la louche selon la revendication 1, caractérisé en ce que l'on tranche le caillé (4) avec la louche de prélèvement (5) sur toute la section du récipient (3).

3. Procédé de fabrication de fromages à la louche selon la revendication 1, caractérisé en ce que l'on obture le fond du récipient par un mouvement circulaire de la louche de prélèvement (5).

4. Procédé de fabrication de fromages à la louche selon la revendication 1, caractérisé en ce que l'on ouvre la louche (8, 9) de réception, formée de deux demilouches, pour déposer la matière prélevée (7) au-dessus du moule (6).

5. Récipient de coagulation pour l'élaboration de "fromages à la louche", destiné à recevoir le lait afin qu'il subisse une maturation par ajout de ferments, puis un empressurage, et ensuite, à l'issue d'une phase de coagulation, qu'il se transforme en caillé (4) ou coagulum, le dit récipient (3) étant de forme cylindrique et présentant un fond escamotable, caractérisé par le fait que le fond est formé par une louche (5) de prélèvement hémisphérique.

6. Récipient de coagulation selon la revendication 5, caractérisé par le fait qu'il comprend une louche de prélèvement (5) hémisphérique et une louche de réception (8, 9) également hémisphérique susceptible, dans un mouvement de rotation, de coulisser dans le volume intérieur de la louche de prélèvement (5).

7. Récipient de coagulation selon la revendication 6, caractérisé par le fait que la louche de réception est formée de deux parties mobiles (8 et 9).

8. Récipient de coagulation selon la revendication 5, caractérisé par le fait que le diamètre de la louche de prélèvement (5) est légèrement supérieur au diamètre intérieur du récipient (3).

**Claims**

1. Process for the production of "ladle-made cheeses" which will find an application in particular in the food industry, during which the milk, placed in a recipient (3), is matured by the addition of ferments, after which rennet is added thereto, and then, following a coagulation phase, it is transformed into curd or coagulum,

in which process the curd (4) contained in the recipient (3) is cut and the removed substance (7) is collected, using a ladle, and then the removed substance (7) is directed into a mould (6),

characterized by the fact that:
- the curd (4) is cut from the bottom of the recipient (3) in a first circular movement of a first hemispherical, or so-called removing ladle (5),
- the removed substance (7) is received in a second hemispherical, so-called receiving, ladle (8, 9), concentric with the said first ladle (5),
- the removed substance (7) is deposited over the mould, by a second circular movement of the said second ladle (8, 9), concentric with the said first ladle (5).

2. Process for the production of "ladle-made cheeses" according to claim 1, characterized in that the curd (4) is cut with the removing ladle (5) over the entire cross-section of the recipient (3).

3. Process for the production of "ladle-made cheeses" according to claim 1, characterized in that the bottom of the recipient is closed by a circular movement of the removing ladle (5).

4. Process for the production of "ladle-made cheeses" according to claim 1, characterized in that the receiving ladle (8, 9), formed of two half-ladles, is opened to deposit the removed substance (7) over the mould (6).

5. Coagulation recipient for the preparation of "ladle-made cheeses", designed to receive the milk so that it is matured through the addition of ferments, after which rennet is added thereto, and then, following a coagulation phase, it is transformed into curd (4) or coagulum, the said recipient (3) being cylindrical in shape and having a retractable bottom, characterized by the fact that the bottom is formed by a hemispherical removing ladle (5).

6. Coagulation recipient according to claim 5, characterized by the fact that it comprises a hemispherical removing ladle (5) and a likewise hemispherical receiving ladle (8, 9), capable, in a rotary movement, of sliding inside the inner volume of the removing ladle (5).

7. Coagulation recipient according to claim 6, characterized by the fact that the receiving ladle is formed by two mobile portions (8 and 9).

8. Coagulation recipient according to claim 5, characterized by the fact that the diameter of the removing ladle (5) is slightly greater than the inside diameter of the recipient (3).

**Patentansprüche**

1. Verfahren zum Herstellen von "Käsen mit dem Schöpflöffel", das nämlich seine Anwendung in der Nährungsmittelindustrie finden wird, während dem die in einem Gefäß befindliche Milch durch Zufügung von Gärungsstoffen einer Reifung unterzogen wird, danach einer Zerpressung und sich danach, am Ende der Gerinnungsphase, in Gerinnsel (4) oder Koagulum verwandelt,
   im welchem Verfahren das im Gefäß (3) enthaltene Gerinnsel (4) getrennt und die vorgegärte Masse (7) mit einem Schöpflöffel aufgefangen wird, wonach die vorgegärte Masse (7) in eine Form (6) gebracht wird,
   dadurch gekennzeichnet, daß:
   - das Gerinnsel (4) an der Unterseite des Gefäßes (3), gemäß einer ersten Kreisbewegung eines ersten halbkugeligen Schöpflöffels (5), der Entnahmeschöpflöffel genannt wird, getrennt wird,
   - die vorgegärte Masse (7) in einen zweiten halbkugeligen Schöpflöffel (8, 9), der Auffangsschöpflöffel genannt wird und konzentrisch zum genannten ersten Schöpflöffel (5) ist, aufgefangen wird,
   - die vorgegärte Masse (7) mit einer zweiten kreisförmigen Bewegung des genannten zweiten halbkugeligen Schöpflöffels (8, 9), der konzentrisch zum genannten ersten Schöpflöffel (5) ist, auf die Form gelegt wird.

2. Verfahren zum Herstellen von Käsen mit dem Schöpflöffel nach Anspruch 1, dadurch gekennzeichnet, daß das Gerinnsel (4) mit dem Entnahmeschöpflöffel (5) über den ganzen Querschnitt des Gefäßes getrennt wird.

3. Verfahren zum Herstellen von Käsen mit dem Schöpflöffel nach Anspruch 1, dadurch gekennzeichnet, daß der Boden des Gefäßes durch eine kreisförmige Bewegung des Entnahmeschöpflöffels (5) verschlossen wird.

4. Verfahren zum Herstellen von Käsen mit dem Schöpflöffel nach Anspruch 1, dadurch gekennzeichnet, daß der aus zwei Halbschöpflöffeln gebildete Auffangsschöpflöffel (8, 9) geöffnet wird, um die vorgegärte Masse (7) auf die Form (6) zu legen.

5. Gerinnungsgefäß zur Herstellung von "Käsen mit dem Schöpflöffel" zur Aufnahme der Milch, damit sie durch Zufügung von Gärungsstoffen einer Reifung unterzogen wird, danach einer Zerpressung und sich danach, am Ende der Gerinnungsphase, in Gerinnsel (4) oder Koagulum verwandelt, wobei das genannte Gefäß (3) zylinderförmig ist une einen einziehbaren Boden aufweist, dadurch gekennzeichnet, daß der Boden durch einen halbkugeligen Entnahmeschöpflöffel (5) gebildet wird.

6. Gerinnungsgefäß nach Anspruch 5, dadurch gekennzeichnet, daß es einen halbkugeligen Entnahmeschöpflöffel (5) und einen ebenfalls halbkugeligen Auffangsschöpflöffel (8, 9), der geeignet ist, in einer Drehbewegung in das Innenvolumen des Entnahmeschöpflöffels (5) zu gleiten, umfaßt.

7. Gerinnungsgefäß nach Anspruch 6, dadurch gekennzeichnet, daß der Auffangsschöpflöffel (8, 9) aus zwei beweglichen Teilen (8 und 9) gebildet ist.

8. Gerinnungsgefäß nach Anspruch 5, dadurch gekennzeichnet, daß der Durchmesser des Entnahmeschöpflöffels (5) geringfügig größer ist als der Innendurchmesser des Gefäßes (3).

FIG.1

EP 0 312 670 B1

FIG.2

4

3

7

6

FIG 3a

3

4

5

6

FIG.3b

3

5

6

9    8

FIG.3c

3

5

6

9    8

FIG.4

3

5

6

FIG.5

3

3

5